# EUROPEAN PATENT SPECIFICATION

(11) **EP 4 366 292 B1**
(45) Date of publication and mention of the grant of the patent: **10.09.2025**
(21) Application number: 23204300.0
(22) Date of filing: 18.10.2023
(51) Int. Cl.: H04N 1/44, H04N 1/00, G06F 3/12, H04W 12/06, H04W 84/12

(54) **IMAGE FORMING APPARATUS**
BILDERZEUGUNGSGERÄT
APPAREIL DE FORMATION D'IMAGES

(30) Priority: 07.11.2022 JP 2022178221
(43) Date of publication of application: 08.05.2024
(73) Proprietor: Brother Kogyo Kabushiki Kaisha, Nagoya, Aichi 467-8561 (JP)
(72) Inventor: TAKEUCHI, Shun, Nagoya, 467-8562, (JP); KANEKO, Tomoya, Nagoya, 467-8562, (JP); RUAN, Longlong, Nagoya, 467-8562, (JP)
(74) Representative: J A Kemp LLP

(56) References cited:
- JP-A- 2014 235 713
- JP-A- 2022 111 275
- US-A1- 2013 139 228
- US-A1- 2019 246 035

## Description

### TECHNICAL FIELD

The technical field disclosed in the present specification relates to a technique of an image forming apparatus connectable to a wireless computer network access point.

### BACKGROUND ART

In recent years, with the spread of telework, as disclosed in Patent Literature 1, an image forming apparatus such as a printer may be provided in a space outside a company, and an operation using the image forming apparatus may be performed in the space outside the company. In a system disclosed in Patent Literature 1, the image forming apparatus can be used by connecting the image forming apparatus to a LAN in advance, connecting a portable terminal carried by a user to a wireless Wi-Fi access point, and downloading a multi-purpose application program to the portable terminal.
US 2013/139228 A1 discloses an information processing apparatus capable of effectively preventing an unauthorized access in a manner cooperatively associated with a predetermined security setting of a wireless communication. An information processing apparatus is capable of wireless communication with an external apparatus, receives a job request therefrom, and executes job processing according to the job request. A CPU sets a management setting for managing users who use the information processing apparatus. The CPU receives the job request from the external apparatus via a wireless LAN interface. The CPU determines, when the job request is received, whether or not the wireless communication has been set to a predetermined security setting, and performs control, when it is determined that the wireless communication has not been set to the predetermined security setting, so as to refuse to accept the job request, unless the management setting has been set.

### CITATION LIST

### PATENT LITERATURE

Patent Literature 1: JP2019-157587A

### SUMMARY OF INVENTION

When the image forming apparatus is used in the space outside the company, the image forming apparatus may also be connected to a wireless LAN access point. In this case, a wireless LAN access point with high security is not necessarily provided in the space outside the company. Since connecting to a wireless LAN access point with low security risks information leakage, a connection with such a wireless LAN access point is not desirable. On the other hand, restricting the connection to the wireless LAN access point may impair the convenience of the space outside the company. Therefore, there is room for improvement in the technique for connecting an image forming apparatus to a wireless LAN access point.

An image forming apparatus according to the present disclosure includes: a wireless communication interface; a user interface; an image forming engine; and a processor. An instruction regarding image formation is configured to be received from an external device by wireless communication via a wireless access point that has established a connection with the wireless communication interface, and establishment of a connection with the wireless access point is performed using an authentication type selected in the wireless access point from among a plurality of authentication types available in a wireless computer network. The processor is configured to control the image forming engine to form an image when the instruction regarding image formation has been received. The processor, in a state in which input of an administrator has been received, further provides a setting screen configured to allow receiving an authentication type setting, which defines whether to allow establishment of a connection between the wireless communication interface and the wireless access point using the authentication type included in the plurality of authentication types. The processor is further configured to, in a state in which input of an administrator has not been received, and in response to receiving a first connection instruction via the user interface, execute: search processing of searching for connectable wireless access points; selection processing of receiving, via the user interface, selection of a selected wireless access point from among the connectable wireless access points searched by the search processing; establishment processing of establishing a connection between the selected wireless access point selected in the selection processing and the wireless communication interface; and reception processing of receiving, after the connection between the selected wireless access point and the wireless communication interface is established, the instruction regarding image formation from an external device by wireless communication via the selected wireless access point. **In** the selection processing based on the first connection instruction, each of the connectable wireless access points searched by the search processing is grouped into a selectable wireless access point and a non-selectable wireless access point, wherein the selectable wireless access point is a wireless access point at which the authentication type, which is defined to allow establishment of a connection on the setting screen, is set to be selectable, and wherein the non-selectable wireless access point is a wireless access point at which the authentication type, which is defined not to allow establishment of a connection on the setting screen, is set to be unselectable.

The image forming apparatus disclosed in the present specification can set whether to establish a connection for each authentication type in the wireless computer network, and determines the wireless access point to be selected according to the setting. For example, when the image forming apparatus is set so as not to establish a connection with the wireless access point for which an authentication type having low security has been selected, it is possible to restrict the connection with the wireless access point of such an authentication type. On the other hand, when the image forming apparatus is set to establish a connection even with the wireless access point for which an authentication type having low security has been selected, the image forming apparatus can be connected even with the wireless access point for which such an authentication type has been selected. Accordingly, the degree of freedom in the case of using the wireless computer network is high, and the image forming apparatus can be operated with a high degree of freedom in consideration of security and convenience.

A control method, a computer program, and a non-transitory computer-readable storage medium storing the program for achieving the functions of the image forming apparatus described above are novel and useful.

According to the technique disclosed in the present specification, a technique for improving processing when connecting an image forming apparatus to a wireless access point is achieved.

### BRIEF DESCRIPTION OF DRAWINGS

FIG. 1 is a block diagram showing an electrical configuration of an MFP according to an embodiment;
FIG. 2A is an explanatory diagram showing an example of a usage environment of the MFP;
FIG. 2B is an explanatory diagram showing another example of a usage environment of the MFP;
FIG. 3 is a flowchart showing an example of a procedure of management processing;
FIG. 4 is an explanatory diagram showing an example of a setting screen;
FIG. 5 is an explanatory diagram showing an example of a setting screen;
FIG. 6 is a flowchart showing an example of a procedure of AP connection processing;
FIG. 7 is an explanatory diagram showing an example of an access point selection screen; and
FIG. 8 is an explanatory diagram showing an example of the access point selection screen.

### DESCRIPTION OF EMBODIMENTS

Hereinafter, an embodiment of an image forming apparatus will be described in detail with reference to the accompanying drawings. The present specification discloses a multifunction peripheral (hereinafter referred to as "MFP") having a wireless communication function.

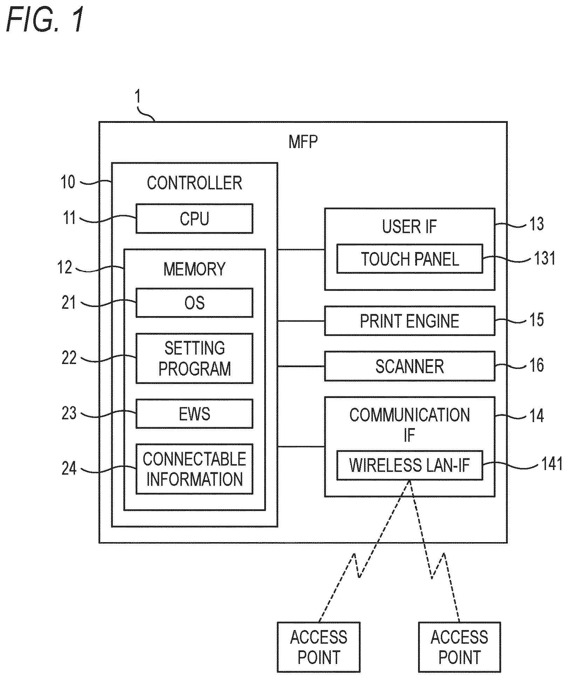

As shown in FIG. 1, an MFP 1 according to the present embodiment includes a controller 10 including a CPU 11 and a memory 12. The MFP 1 is an example of the image forming apparatus. The CPU 11 is an example of a processor. The MFP 1 includes a user interface (hereinafter referred to as "user IF") 13, a communication interface (hereinafter referred to as "communication IF") 14, a print engine 15, and a scanner 16, which are electrically connected to the controller 10. The print engine 15 and the scanner 16 are examples of an image forming engine.

The CPU 11 executes various types of processing according to a program read from the memory 12 and based on an operation of a user. As shown in FIG. 1, the memory 12 stores various application programs (hereinafter referred to as "apps") and various types of data including an operating system (hereinafter referred to as "OS") 21, a setting program 22, a program and data (hereinafter referred to as "EWS") 23 for realizing an embedded web server function, and connectable information 24. The program and data will be described later in detail.

The memory 12 is used as an operation region when various types of processing are executed. A buffer provided in the CPU 11 is also an example of the memory 12. An example of the memory 12 is not limited to a ROM, a RAM, an HDD, or the like built in the MFP 1, and may be a storage medium that can be read and written by the CPU 11. A computer-readable storage medium is a non-transitory medium. Examples of the non-transitory medium include recording media such as a CD-ROM and a DVD-ROM, in addition to the above examples. The non-transitory medium is a tangible medium. On the other hand, an electrical signal for conveying a program downloaded from a server on the Internet is a computer-readable signal medium which is a type of computer-readable medium, but is not included in a non-transitory computer-readable storage medium.

The user IF 13 includes hardware that displays a screen for informing the user of information and hardware that receives an operation of the user. The user IF 13 includes a touch panel 131 having a screen display function and an operation reception function. The user IF 13 may be a combination of a display unit and an operation button.

The communication IF 14 includes hardware for communicating with an external device. The communication IF 14 includes a wireless LAN interface (hereinafter referred to as a "wireless LAN-IF", which is an example of a wireless communication interface) 141 having a wireless communication function compatible with at least the Wi-Fi (registered trademark) standard. The MFP 1 can be connected to, via the wireless LAN-IF 141, a wireless LAN access point (hereinafter, simply referred to as "access point", which is an example of a wireless access point) having a wireless communication function compatible with the Wi-Fi standard. The communication IF 14 may have a function compatible with a communication standard such as Ethernet (registered trademark) or USB. The MFP 1 may include a plurality of communication IFs 14 compatible with a plurality of communication standards.

The print engine 15 prints an image based on image data on a print medium such as a sheet. A printing method of the print engine 15 is, for example, an electrophotographic method or an inkjet method. The scanner 16 reads an image of a document and acquires image data.

Next, an operation procedure of the MFP 1 will be described with reference to a flowchart. The following processing basically represents processing of the CPU 11 according to instructions described in the program. That is, processing such as "determination", "extraction", "selection", "calculation", "decision", "identification", "acquisition", "reception", and "control" in the following description represents processing of the CPU. The processing of the CPU also includes hardware control using an API of an OS. In the present specification, the description of the OS is omitted, and operations of programs are described. That is, in the following description, the description that "a program B controls hardware C" may mean that "the program B controls the hardware C using the API of the OS". The processing of the CPU according to the instructions described in the program may be described in abbreviated terms. For example, it may be described as "performed by the CPU". The processing of the CPU according to the instructions described in the program may be described by abbreviating the CPU, such as "performed by the program A".

"Acquisition" is used as a concept that does not require a request. That is, the processing of receiving data without a request from the CPU is also included in a concept that "the CPU acquires the data". In the present specification, the "data" is represented by a computer-readable bit string. Data having substantially the same meaning but different formats is treated as the same data. The same applies to "information" in the present specification. The terms "request" and "instruct" are concepts indicating that information indicating a request or information indicating an instruction is output to the other party. Information indicating a request or information indicating an instruction is also simply referred to as a "request" or an "instruction".

Processing of determining, by the CPU, whether information A indicates matter B may be conceptually described as "determining whether the information A is the matter B". Processing of determining, by the CPU, whether the information A indicates the matter B or matter C may be conceptually described as "determining whether the information A is the matter B or the matter C".

When an employee performs a remote work, an employee PC 3, which is a personal computer (hereinafter referred to as "PC") to be used, is often set by a user having administrator authority so as to access information of a company using highly secure communication such as a VPN (abbreviation for Virtual Private Network). For PCs, high-performance OSs and anti-virus software are sufficiently prepared in the world. The employee PC 3 can easily take a security measure using a high-performance OS or anti-virus software by the user having administrator authority.

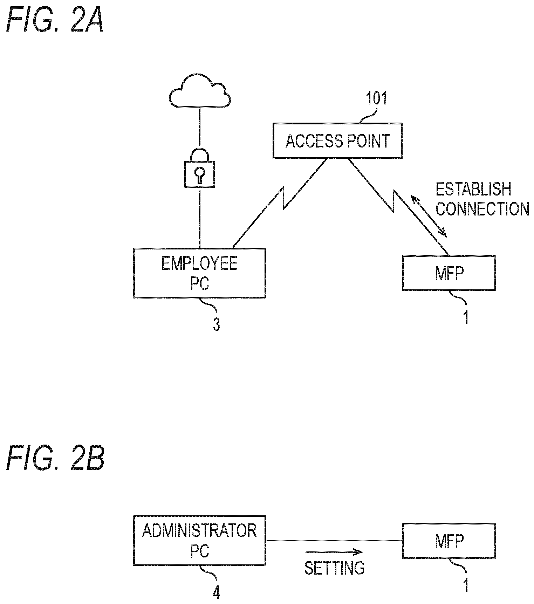

On the other hand, security countermeasure methods for the MFP 1 are not as abundant as those for the PC. For example, as shown in FIG. 2A, the MFP 1 may exchange image data with the employee PC 3 by communication via an access point 101. That is, the MFP 1 can receive an instruction related to image formation, such as a print instruction or a scan instruction, from an external device such as the employee PC 3 by wireless LAN communication, which is an example of wireless communication, via an access point connected to the wireless LAN-IF 141. It is not preferable for the MFP 1 to establish a connection with an access point having low security. However, since an administrator of the MFP 1 cannot always grasp the environment used by each employee, it is difficult to individually designate access points for establishing connections.

For example, as shown in FIG. 2B, the MFP 1 can receive various setting instructions from an administrator PC 4 used by the administrator via the communication IF 14 before being provided in the environment of the remote work. The MFP 1 according to the present embodiment can receive a setting instruction for an access point for establishing a connection.

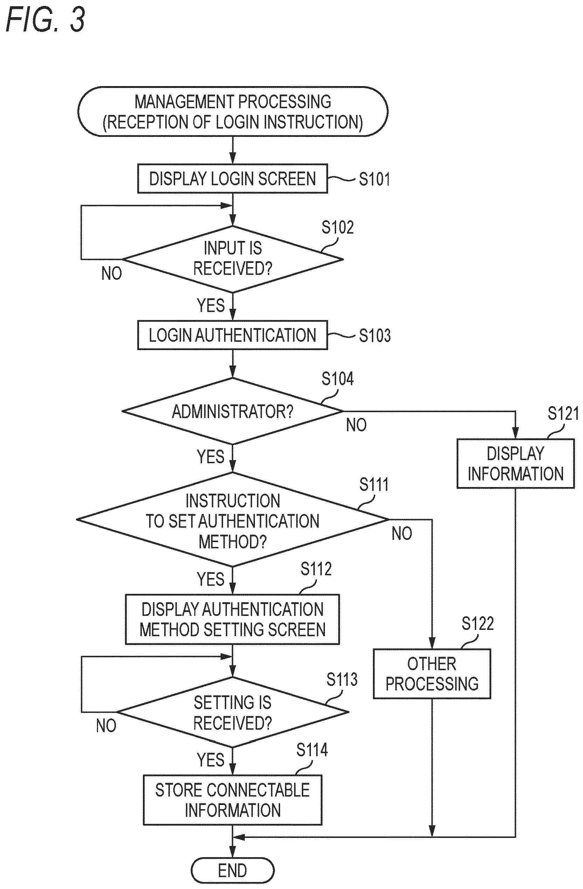

First, a procedure of management processing will be described with reference to a flowchart in FIG. 3. The management processing is executed by the CPU 11 of the MFP 1 upon reception of a login instruction to the MFP 1. The MFP 1 can receive a login instruction via the EWS 23, for example. The MFP 1 can receive access to the EWS 23 by, for example, a wired connection. When the MFP 1 is shipped from a factory, an access point setting may not be received, and communication may be possible via any access point.

When access to the EWS 23 is received via the communication IF 14, the MFP 1 can provide web page data to an access source device, for example, the administrator PC 4. The administrator PC 4 is an example of a communicable terminal device. A browser embedded in the administrator PC 4 can display a web page based on the provided web page data. When the MFP 1 displays the login screen on the browser of administrator PC 4 by providing web page data indicating a login screen for receiving input of authentication information based on the reception of the login instruction (S101).

When the browser of the administrator PC 4 displays a screen based on the web page data received from the MFP 1, the browser of the administrator PC 4 can transmit information indicating the received operation on the screen to the MFP 1. The MFP 1 can acquire the received authentication information based on the information received from the administrator PC 4. The CPU 11 acquires the authentication information input on the login screen (S102), and executes login authentication based on the acquired authentication information (S103). S103 is an example of login processing.

The CPU 11 determines whether the login by the user having administrator authority has succeeded (S104). For example, the MFP 1 stores, in the memory 12, administrator authentication information set by a vendor in advance at the time of shipment from the factory. The MFP 1 can receive an instruction to change the administrator authentication information, and stores the changed information in the memory 12 when the instruction to change the administrator authentication information is received. In S104, the CPU 11 determines whether authentication information matches the administrator authentication information stored in the memory 12.

When it is determined that the authentication information matches the administrator authentication information (S104: YES), the CPU 11 provides web page data for displaying a screen for the administrator. Then, it is determined whether the input of an instruction to set the authentication method has been received via the screen for the administrator (S111). When it is determined that the instruction to set the authentication method has been received (S111: YES), the CPU 11 provides web page data for displaying an authentication method setting screen (S112). Hereinafter, a state after the login by the user having administrator authority has succeeded is also described as a state in which the login is executed by the administrator authority.

An authentication method to be used is selected in advance for each access point. In order to establish a connection with an access point, the MFP 1 needs to use the authentication method selected for the access point. The setting screen provided in S112 is a screen for receiving selection of the administrator for the authentication method for allowing establishment of a connection between the wireless LAN-IF 141 and the access point. The authentication method is an example of an authentication type. The setting screen provided in S112 is configured to allow receiving an authentication type setting, which defines whether to allow establishment of a connection between the wireless communication interface 141 and the wireless access point using the authentication type.

Examples of the authentication method include "Open System", "Shared Key", "WPA", "WPA2-PSK", and "WPA3-SAE". The "Open System" is a method that can be used by selecting an SSID without using a password. Therefore, the "Open System" is an authentication method having low security. "Shared Key" is an authentication method having higher security than the "Open System", and "WPA", "WPA2-PSK", and "WPA3-SAE" have higher security in that order.

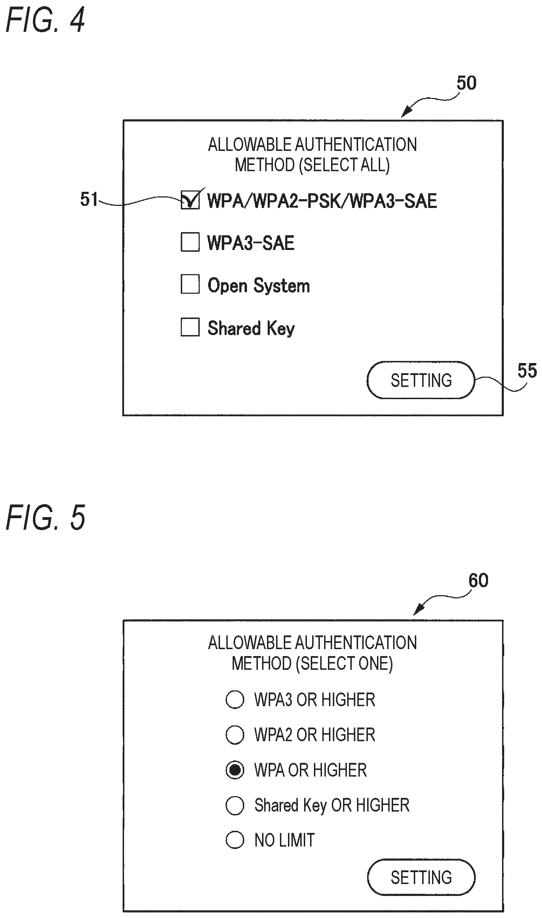

In S112, for example, as shown in FIG. 4, the CPU 11 displays a setting screen 50 including a name of each authentication method compatible with the wireless LAN-IF 141 and a check box that receives selection as to whether to allow establishment of a connection for each authentication method.

The setting screen 50 may be a screen including a check box 51 that allows a plurality of authentication methods. When a setting button 55 is operated in a state in which the check box 51 is checked in an example in FIG. 4, the CPU 11 determines that all of "WPA", "WPA2-PSK", and "WPA3-SAE" are allowed. When the setting button 55 is operated in a state in which other check boxes are checked, the CPU 11 determines that all the authentication methods corresponding to the checked check boxes are allowed.

For example, as shown in FIG. 5, the CPU 11 may display a setting screen 60 for receiving an authentication type setting of an authentication method that corresponds to a boundary of whether to allow the establishment. The setting screen 60 includes an alternative button for selecting an authentication method having the lowest security among the allowable authentication methods. The administrator performs an operation indicating a setting instruction in a state in which any one of the buttons displayed on the setting screen 60 is selected. The authentication methods are ranked in advance based on security, and the ranking is stored in the MFP 1. Therefore, by selecting the authentication method having the lowest allowable security, it is possible to issue an instruction to allow all the authentication methods having security equal to or higher than the selected authentication method.

In this way, since the administrator only needs to set the ranking of the boundary, the setting operation is easy. The authentication method of the ranking of the boundary to be displayed is an allowable authentication method. Each option displayed on the setting screen 60 is not limited to an instruction to allow the displayed authentication method equal to or higher than the ranking of the boundary, and may be an instruction that does not allow an authentication method lower than the ranking of the boundary.

The CPU 11 determines whether a setting instruction has been received on the displayed setting screen (S113). For example, the CPU 11 determines whether information indicating an input operation to the setting button has been received from the browser of the administrator PC 4 via the EWS 23.

When the setting instruction has not been received (S113: NO), the CPU 11 waits until receiving the setting instruction. When the CPU 11 determines that the setting instruction has been received (S113: YES), the CPU 11 stores, in a non-volatile storage region of the memory 12, information indicating an authentication method for allowing establishment of a connection as the connectable information 24 based on the received instruction (S114). Since it is possible to set whether to allow establishment of a connection by the authentication method, the degree of freedom of setting is high.

When it is determined that the authentication information received on the login screen is not the administrator authentication information (S104: NO), the CPU 11 does not receive the instruction to set the authentication method. In this case, for example, the CPU 11 provides web page data for displaying a screen for a general user other than the administrator (S121). Accordingly, a general employee cannot set an authentication method for allowing establishment of a connection. In this way, the setting of the connectable information 24 becomes possible only when the MFP 1 is logged in with the administrator authority. That is, the MFP 1 can limit the user who can set whether to allow a connection based on the authentication method to the administrator.

When the MFP 1 receives access from an external device via the EWS 23, the MFP 1 may first display the screen for a general user (S121). The MFP 1 may receive a login instruction via the screen for a general user. In this case, the MFP 1 may also execute the login authentication based on the received authentication information (S103), and when it is determined that the administrator authentication information has been received, the MFP 1 may display a screen for the administrator and receive the instruction to set the authentication method via the screen for the administrator (S111).

In a case in which an instruction other than the instruction to set the authentication method has been received even when the MFP 1 is logged in with the administrator authority (S111: NO), the CPU 11 executes processing based on the received instruction (S122). After S114, the CPU 11 can receive various instructions and operates based on the received instruction. When the instruction to end the processing has been received, the CPU 11 ends the management processing.

If the MFP 1 is logged in with administrator authority via the EWS 23, the MFP 1 receives a setting via a network. Accordingly, the administrator does not need to operate the user IF 13 of the MFP 1 for setting, and the setting is easy. A user who can set whether to establish a connection based on the authentication method is limited to the administrator.

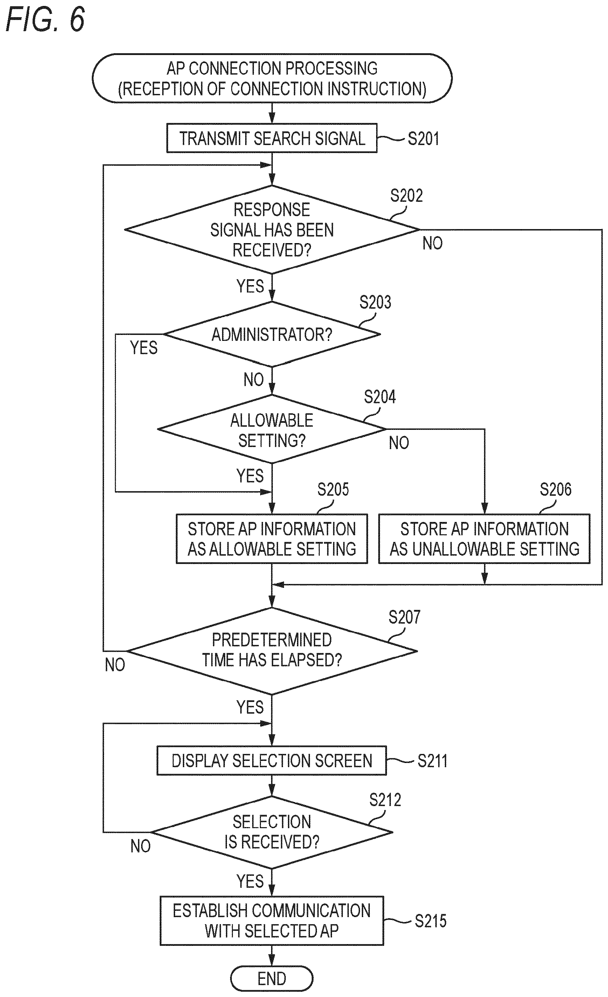

Next, a procedure of AP connection processing will be described with reference to a flowchart in FIG. 6. The AP connection processing is executed by the CPU 11 of the MFP 1 upon reception of an instruction to start a procedure for establishing a connection to the access point. An instruction to start the AP connection processing is input on the touch panel 131 of the user IF 13 by, for example, an employee who performs a remote work after the MFP 1 is provided in usage environment in which the remote work is performed.

The MFP 1 can receive an instruction to execute the AP connection processing whether logged in with the administrator authority or not logged in with the administrator authority. The instruction to execute the AP connection processing in a state in which the MFP 1 is not logged in with the administrator authority is an example of a first connection instruction. The instruction to execute the AP connection processing in a state in which the MFP 1 is logged in with the administrator authority is an example of a second connection instruction.

In the AP connection processing, the CPU 11 transmits a search signal for searching for a nearby access point via the wireless LAN-IF 141 (S201). Then, the CPU 11 determines whether a response signal from the access point has been received (S202). Each access point transmits a response signal in response to the received search signal when the search signal has been received. S201 and S202 are examples of search processing.

When it is determined that the response signal has been received (S202: YES), the CPU 11 determines whether the MFP 1 is in a state of being logged in with the administrator authority (S203). When it is determined that the MFP 1 is not in the state of being logged in with the administrator authority (S203: NO), the CPU 11 determines whether the authentication method of the access point is the authentication method stored as an allowable setting in the connectable information 24 based on a parameter acquired by receiving the response signal (S204).

The parameter acquired from each access point includes, for example, information indicating the SSID of the access point and information indicating the authentication method selected for the access point. The parameter may further include information on an MAC address of the access point and information on an encryption method. Each access point transmits a signal including the parameter as the response signal. Alternatively, the MFP 1 may request the access point separately from the response signal to acquire each parameter.

When it is determined that the MFP 1 is in the state of being logged in with the administrator authority (S203: YES), or when it is determined that the authentication method of the access point is the allowable authentication method (S204: YES), the CPU 11 sets the parameter acquired based on the response signal received in S202 as the allowable setting and stores the parameter in the memory 12 (S205). When it is determined that the setting is not allowable (S204: NO), the CPU 11 sets the parameter as an unallowable setting and stores the parameter in the memory 12 (S206).

In the state of being logged in with the administrator authority, the MFP 1 allows all the access points that have received the response signal regardless of the presence or absence of the information stored as the connectable information 24. In the state of being logged in with the administrator authority, for example, it is assumed that work is performed in a situation in which a certain degree of security is secured in a company. In this case, it is more convenient if the administrator can freely use the wireless LAN without restricting the access point for establishing a connection, and making it possible to connect to the access point under the responsibility of the administrator.

On the other hand, when the MFP 1 is not in the state of being logged in with the administrator authority, the MFP 1 determines whether to allow establishment of a connection based on the information on the authentication method stored as the connectable information 24. For example, as shown in FIGS. 4 and 5, when the connectable information 24 stores, for example, information indicating that establishment of a connection is allowed if the authentication method has security equal to or higher than WPA, the CPU 11 sets the access point to an allowable setting if the parameter of the access point includes information indicating the authentication method having security equal to or higher than WPA.

When the connectable information 24 is stored as shown in FIGS. 4 and 5, for example, if the parameter acquired from the access point with the SSID "AP01" includes information indicating "WPA2-PSK" and "WPA3-SAE" as the authentication method, the CPU 11 determines that the connection with the access point is allowed. For example, if the parameter acquired from the access point with the SSID "AP02" includes information indicating "Shared Key" and "Open System", the CPU 11 determines that the connection with the access point is not allowed.

After S205 or S206, or when determining that the response signal has not been received (S202: NO), the CPU 11 determines whether a predetermined time has elapsed after sending the search signal (S207). The predetermined time is, for example, 2 seconds. When it is determined that the predetermined time has not elapsed (S207: NO), the CPU 11 further waits for reception of the response signal.

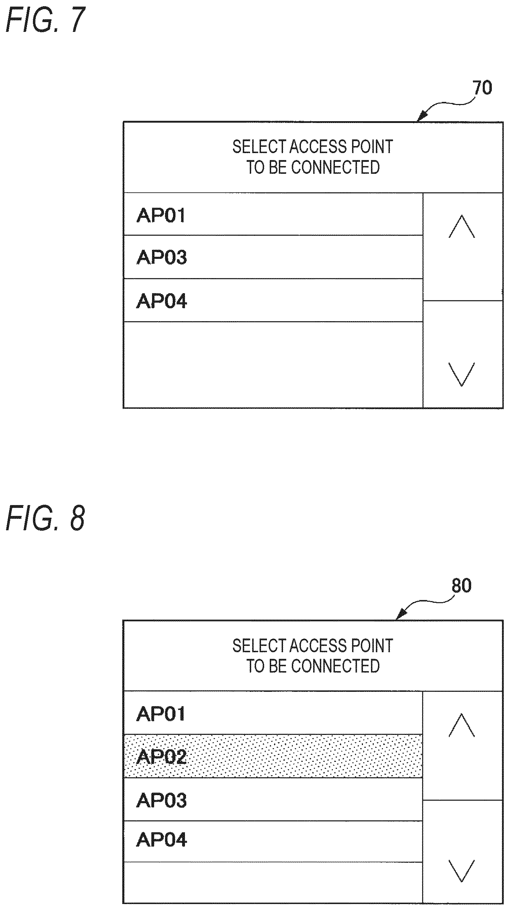

When it is determined that the predetermined time has elapsed (S207: YES), the CPU 11 displays information on each access point in a list and displays a selection screen for receiving a selection instruction of the user (S211). The selection screen is a screen in which the access point allowed to establish a connection is displayed in a selectable manner, and the access point not allowed to establish a connection is displayed in an unselectable manner. For example, as shown in FIG. 7, the CPU 11 causes the touch panel 131 to display a selection screen 70 including, as an option, only the access point stored as the allowable setting in S205.

Then, the CPU 11 determines whether the selection of the access point has been received on the selection screen (S212). S212 is an example of selection processing. When it is determined that the selection has not been received (S212: NO), the CPU 11 waits until the selection is received. By an operation on the touch panel 131, the user can select an access point to attempt to establish a connection from among the access points displayed selectably.

The CPU 11 may display the information on the access point stored as the allowable setting and the information on the access point stored as the unallowable setting in different display forms. For example, the CPU 11 may display, in an unselectable manner, the access point stored as the unallowable setting. For example, as shown in FIG. 8, the CPU 11 may display a selection screen 80. In the selection screen 80, an access point having the SSID "AP02" that is an unselectable access point is grayed out and displayed. When an operation of selecting an access point displayed in an unselectable manner on the touch panel 131 is executed, the CPU 11 may determine that the selection of the access point has not been received (S212: NO).

When only the information on the selectable access point is displayed as options, the display is not complicated, and the user can select the access point for establishing a connection from the displayed options, which facilitates the selection. On the other hand, when the information on the access point that is not allowed is also displayed in an unselectable manner, it can be seen that the unselectable access point is also detected, and the user can easily understand that the access point is not selectable.

If the information on the unselectable access point is not displayed, the CPU 11 may not store the information on the access point not allowed to establish a connection. That is, S206 may be omitted. When it is determined that there is no selectable access point, the CPU 11 may display a screen for prompting the MFP 1 and the employee PC 3 (see FIGS. 2A and 2B) to be connected via USB.

When it is determined that the selection of the access point has been received on the selection screen (S212: YES), the CPU 11 attempts to establish a communication connection with the selected access point via the wireless LAN-IF 141 (S215). S215 is an example of establishment processing. For example, the CPU 11 displays a screen for receiving input of a password for a connection set in the access point, receives the input of the user, and transmits the received password to the selected access point.

When the connection with the access point is successfully established, the MFP 1 can receive an instruction from an external device such as the employee PC 3 (see FIGS. 2A and 2B) by wireless LAN communication via the access point. The employee can transmit a print instruction or a scan instruction to the MFP 1 using the employee PC 3. The MFP 1 can perform printing using the print engine 15 or scanning using the scanner 16 based on the received instruction. If the establishment of the connection fails due to a password mismatch or the like, the CPU 11 may display the selection screen again.

After S215, the CPU 11 ends the AP connection processing. The MFP 1 can receive designation of allowable security for the authentication method used for a connection with an access point. Accordingly, the administrator can make a setting such that the MFP 1 is not allowed to be used while being connected to an access point having low security. The CPU 11 may store information on the selected access point and use the information for subsequent connections.

As described above in detail, the MFP 1 according to the present embodiment receives a setting as to whether to allow establishment of a connection for the authentication method selected for the access point. Then, the MFP 1 receives the selection of the access point for establishing a connection according to the setting. For example, if a setting is made so as not to allow establishment of a connection with an access point for which an authentication method having low security is selected, wireless LAN communication using the authentication method having low security is less likely to be executed. For example, in an environment in which an employee performs a remote work, it is possible to restrict the connection with the access point for which an authentication method having low security is selected, and thus it is possible to reduce the risk of information leakage from the access point. On the other hand, when a setting is made to establish a connection even with the access point for which an authentication method having low security is selected, the MFP 1 receives the establishment of the connection with the access point for which such an authentication method is selected. Accordingly, it is possible to achieve an operation with a high degree of freedom in consideration of security and convenience.

The present embodiment is merely an example and does not limit the present invention in any way. Therefore, as a matter of course, the technique disclosed in the present specification can be variously improved and modified without departing from the gist thereof. For example, the image forming apparatus is not limited to the MFP, but may be a printer, a scanner, a FAX device, and the like, and can be applied as long as the image forming apparatus has at least a wireless communication function and an image forming function.

The display modes of the various screens illustrated in the present embodiment are all examples, and the wording and arrangement of the options displayed on each screen are not limited to the illustrated examples. For example, the authentication method of the ranking of the boundary displayed on the setting screen 60 (see FIG. 5) may be an unallowable authentication method. That is, the options may be an option of receiving an instruction to allow an authentication method higher than the ranking of the boundary or an option of receiving an instruction that does not allow an authentication method equal to or lower than the ranking of the boundary.

In the present embodiment, the setting of the authentication method has been described. The MFP 1 may be capable of setting whether to allow other conditions used for wireless LAN communication. For example, the MFP 1 may be capable of receiving a setting for an allowable encryption method. In this case, the encryption method is an example of an authentication type.

For example, in the present embodiment, a login instruction for starting the management processing is received via the EWS 23. Alternatively, the login instruction may be received via the user IF 13. The MFP 1 may receive a login instruction from any one of the EWS 23 and the user IF 13, or may receive a login instruction from only one of the EWS 23 and the user IF 13. Further, the MFP 1 may receive a login instruction not only by operating the touch panel 131 but also by operating a button provided in the user IF 13, or may receive a login instruction by short-range wireless communication with an IC card or the like according to the NFC (the abbreviation for Near Field Communication) standard.

In a state in which the MFP 1 is logged in with the administrator authority, the MFP 1 allows all the access points that have received the response signal regardless of the connectable information 24. However, the present invention is not limited thereto. The MFP 1 may determine the allowable access point based on the connectable information 24 regardless of whether the MFP 1 is logged in. In this case, S203 of the AP connection processing (see FIG. 6) may be omitted.

In any sequence diagram disclosed in the embodiments, any of a plurality of pieces of processing in a plurality of steps can be freely changed in execution order or executed in parallel within a range in which a contradiction does not occur in the processing contents.

The processing disclosed in the embodiments may be executed by hardware such as a single CPU, a plurality of CPUs, and an ASIC, or a combination thereof. The processing disclosed in the embodiments can be implemented in various forms such as a recording medium recording a program for executing the processing, or a method.

## Claims

1. An image forming apparatus (1) comprising:
a wireless communication interface (141);
a user interface (13);
an image forming engine (15, 16); and
a processor (11),
wherein an instruction regarding image formation is configured to be received from an external device (3) by wireless communication via a wireless access point (101) that has established a connection with the wireless communication interface, and establishment of a connection with the wireless access point is performed using an authentication type selected in the wireless access point from among a plurality of authentication types available in a wireless computer network,
wherein the processor is configured to control the image forming engine to form an image when the instruction regarding image formation has been received,
wherein, in a state in which input of an administrator has been received, the processor further provides a setting screen (50, 60) configured to allow receiving an authentication type setting, which defines whether to allow establishment of a connection between the wireless communication interface and the wireless access point using the authentication type included in the plurality of authentication types,
**characterized in that**, in a state in which input of an administrator has not been received, and in response to receiving a first connection instruction via the user interface, the processor is further configured to execute:
search processing (S201, S202) of searching for connectable wireless access points;
selection processing (S212) of receiving, via the user interface, selection of a selected wireless access point from among the connectable wireless access points searched by the search processing;
establishment processing (S215) of establishing a connection between the selected wireless access point selected in the selection processing and the wireless communication interface; and
reception processing of receiving, after the connection between the selected wireless access point and the wireless communication interface is established, the instruction regarding image formation from an external device by wireless communication via the selected wireless access point, and
in the selection processing based on the first connection instruction, each of the connectable wireless access points searched by the search processing is grouped into a selectable wireless access point and a non-selectable wireless access point, wherein the selectable wireless access point is a wireless access point at which the authentication type, which is defined to allow establishment of a connection on the setting screen, is set to be selectable, and wherein the non-selectable wireless access point is a wireless access point at which the authentication type, which is defined not to allow establishment of a connection on the setting screen, is set to be unselectable.

2. The image forming apparatus according to claim 1,
wherein, in the selection processing, the processor is configured to control a display device to display, among the connectable wireless access points searched for by the search processing, an option of the selectable wireless access point in a display mode different from that of an option of the non-selectable wireless access point.

3. The image forming apparatus according to claim 1,
wherein the processor provides the setting screen configured to allow receiving the authentication type setting for each of the plurality of authentication types available in the wireless computer network.

4. The image forming apparatus according to claim 1,
wherein the plurality of authentication types in the wireless computer network are ranked based on security,
wherein the processor receives, on the setting screen, a setting indicating a ranking of a boundary as to whether to establish a connection, and
wherein the processor sets to establish a connection for an authentication type having a higher ranking than the received boundary, and sets not to establish a connection for an authentication type having a lower ranking than the received boundary.

5. The image forming apparatus according to claim 1,
wherein the processor receives input of authentication information, executes login processing based on the received authentication information, and receives input of an administrator when the login processing by a user having administrator authority is successful.

6. The image forming apparatus according to claim 1,
wherein the processor is configured to receive, from a terminal device configured to execute communication via a network and logged in by a user having administrator authority, the authentication type setting via the setting screen.

7. The image forming apparatus according to claim 1, further comprising:
an embedded web server (23), which is a program for functioning as a web server,
wherein the processor is configured to, when there is access to the embedded web server and a user having administrator authority logs in the embedded web server, provide a web page showing the setting screen to an access source by the embedded web server, and receive the authentication type setting by inputting to the web page.

8. The image forming apparatus according to claim 1,
wherein the processor is configured to receive a second connection instruction in the state in which input of an administrator has been received,
wherein the processor is further configured to execute, in response to the second connection instruction, the search processing, the selection processing, and the establishment processing, and
wherein, in the selection processing based on the second connection instruction, the connectable wireless access points searched by the search processing are set to be selectable by disregarding the authentication type setting.

## Patentansprüche

1. Bilderzeugungsvorrichtung (1), umfassend:
eine drahtlose Kommunikationsschnittstelle (141);
eine Benutzeroberfläche (13);
einen Bilderzeugungsmotor (15, 16); und
einen Prozessor (11),
wobei eine Anweisung bezüglich Bilderzeugung konfiguriert ist, um von einer externen Vorrichtung (3) empfangen zu werden durch drahtlose Kommunikation über einen drahtlosen Zugangspunkt (101), der eine Verbindung mit der drahtlosen Kommunikationsschnittstelle hergestellt hat, und eine Herstellung einer Verbindung mit dem drahtlosen Zugangspunkt durchgeführt wird unter Verwendung eines Authentifizierungstyps, ausgewählt in dem drahtlosen Zugangspunkt aus einer Vielzahl von Authentifizierungstypen, die in einem drahtlosen Computernetzwerk verfügbar sind,
wobei der Prozessor konfiguriert ist, um den Bilderzeugungsmotor zu steuern, um ein Bild zu erzeugen, wenn die Anweisung bezüglich Bilderzeugung empfangen wurde,
wobei, in einem Zustand, in dem eine Eingabe eines Administrators empfangen wurde, der Prozessor ferner einen Einstellungsbildschirm (50, 60) bereitstellt, der konfiguriert ist, um den Empfang einer Authentifizierungstyp-Einstellung zuzulassen, die definiert, ob eine Herstellung einer Verbindung zwischen der drahtlosen Kommunikationsschnittstelle und dem drahtlosen Zugangspunkt zugelassen wird, unter Verwendung des Authentifizierungstyps, der in der Vielzahl von Authentifizierungstypen beinhaltet ist,
**dadurch gekennzeichnet, dass**, in einem Zustand, in dem eine Eingabe eines Administrators nicht empfangen wurde, und als Reaktion auf den Empfang einer ersten Verbindungsanweisung über die Benutzeroberfläche, der Prozessor ferner konfiguriert ist, um Folgendes auszuführen:
Suchverarbeitung (S201, S202) des Suchens von verbindbaren drahtlosen Zugangspunkten;
Auswahlverarbeitung (S212) des Empfangens, über die Benutzeroberfläche, einer Auswahl eines ausgewählten drahtlosen Zugangspunkts aus den verbindbaren drahtlosen Zugangspunkten, die von der Suchverarbeitung gesucht werden;
Herstellungsverarbeitung (S215) des Herstellens einer Verbindung zwischen dem ausgewählten drahtlosen Zugangspunkt, ausgewählt in der Auswahlverarbeitung, und der drahtlosen Kommunikationsschnittstelle; und
Empfangsverarbeitung des Empfangens, nachdem die Verbindung zwischen dem ausgewählten drahtlosen Zugangspunkt und der drahtlosen Kommunikationsschnittstelle hergestellt ist, der Anweisung bezüglich Bilderzeugung von einer externen Vorrichtung durch drahtlose Kommunikation über den ausgewählten drahtlosen Zugangspunkt, und
in der Auswahlverarbeitung basierend auf der ersten Verbindungsanweisung ist jeder der verbindbaren drahtlosen Zugangspunkte, die von der Suchverarbeitung gesucht werden, in einen auswählbaren drahtlosen Zugangspunkt und einen nicht auswählbaren drahtlosen Zugangspunkt gruppiert, wobei der auswählbare drahtlose Zugangspunkt ein drahtloser Zugangspunkt ist, an dem der Authentifizierungstyp, der definiert ist, um die Herstellung einer Verbindung auf dem Einstellungsbildschirm zuzulassen, eingestellt ist, um auswählbar zu sein, und wobei der nicht auswählbare drahtlose Zugangspunkt ein drahtloser Zugangspunkt ist, an dem der Authentifizierungstyp, der definiert ist, um die Herstellung einer Verbindung auf dem Einstellungsbildschirm nicht zuzulassen, eingestellt ist, um nicht auswählbar zu sein.

2. Bilderzeugungsvorrichtung nach Anspruch 1,
wobei, in der Auswahlverarbeitung, der Prozessor konfiguriert ist, um eine Anzeigevorrichtung zu steuern, um, aus den verbindbaren drahtlosen Zugangspunkten, die von der Suchverarbeitung gesucht werden, eine Option des auswählbaren drahtlosen Zugangspunkts in einem Anzeigemodus anzuzeigen, der anders als der einer Option des nicht auswählbaren drahtlosen Zugangspunkts ist.

3. Bilderzeugungsvorrichtung nach Anspruch 1,
wobei der Prozessor den Einstellungsbildschirm bereitstellt, der konfiguriert ist, um den Empfang der Authentifizierungstyp-Einstellung für jeden der Vielzahl von Authentifizierungstypen zuzulassen, die in dem drahtlosen Computernetzwerk verfügbar sind.

4. Bilderzeugungsvorrichtung nach Anspruch 1,
wobei die Vielzahl von Authentifizierungstypen in dem drahtlosen Computernetzwerk basierend auf Sicherheit eingestuft ist,
wobei der Prozessor, auf dem Einstellungsbildschirm, eine Einstellung empfängt, die eine Rangordnung einer Grenze darüber angibt, ob eine Verbindung hergestellt werden soll, und
wobei der Prozessor einstellt, um eine Verbindung für einen Authentifizierungstyp herzustellen, der einen höheren Rang aufweist als die empfangene Grenze, und einstellt, eine Verbindung für einen Authentifizierungstyp nicht herzustellen, der einen niedrigeren Rang als die empfangene Grenze aufweist.

5. Bilderzeugungsvorrichtung nach Anspruch 1,
wobei der Prozessor eine Eingabe von Authentifizierungsinformationen empfängt, Login-Verarbeitung basierend auf den empfangenen Authentifizierungsinformationen ausführt und eine Eingabe eines Administrators empfängt, wenn die Login-Verarbeitung durch einen Nutzer mit Administratorberechtigung erfolgreich ist.

6. Bilderzeugungsvorrichtung nach Anspruch 1,
wobei der Prozessor konfiguriert ist, um, von einem Endgerät, das konfiguriert ist, um Kommunikation über ein Netzwerk aufzuführen, und durch einen Nutzer mit Administratorberechtigung eingeloggt ist, die Authentifizierungstyp-Einstellung über den Einstellungsbildschirm zu empfangen.

7. Bilderzeugungsvorrichtung nach Anspruch 1, ferner umfassend:
einen integrierten Webserver (23), der ein Programm zum Funktionieren wie ein Webserver ist,
wobei der Prozessor konfiguriert ist, um, wenn es Zugang zu dem integrierten Webserver gibt und ein Nutzer mit Administratorberechtigung sich in den integrierten Webserver einloggt, eine Webseite, die den Einstellungsbildschirm zeigt, einer Zugangsquelle durch den integrierten Webserver bereitzustellen, und die Authentifizierungstyp-Einstellung durch Eingeben in die Website zu empfangen.

8. Bilderzeugungsvorrichtung nach Anspruch 1,
wobei der Prozessor konfiguriert ist, um eine zweite Verbindungsanweisung in dem Zustand zu empfangen, in dem eine Eingabe eines Administrators empfangen wurde,
wobei der Prozessor ferner konfiguriert ist, um, als Reaktion auf die zweite Verbindungsanweisung, die Suchverarbeitung, die Auswahlverarbeitung und die Herstellungsverarbeitung auszuführen, und
wobei, in der Auswahlverarbeitung basierend auf der zweiten Verbindungsanweisung, die verbindbaren drahtlosen Zugangspunkte, die von der Suchverarbeitung gesucht werden, eingestellt sind, um durch Nichtbeachten der Authentifizierungstyp-Einstellung auswählbar zu sein.

## Revendications

1. Appareil de formation d'image (1) comprenant :
une interface de communication sans fil (141) ;
un interface utilisateur (13) ;
un moteur de formation d'image (15, 16) ; et
un processeur (11),
dans lequel une instruction concernant la formation d'image est configurée pour être reçue à partir d'un dispositif externe (3) par communication sans fil via un point d'accès sans fil (101) qui a établi une connexion avec l'interface de communication sans fil, et l'établissement d'une connexion avec le point d'accès sans fil est réalisé à l'aide d'un type d'authentification sélectionné dans le point d'accès sans fil parmi une pluralité de types d'authentification disponibles dans un réseau informatique sans fil,
dans lequel le processeur est configuré pour commander le moteur de formation d'image pour former une image lorsque l'instruction concernant la formation d'image a été reçue,
dans lequel, dans un état dans lequel une entrée d'un administrateur a été reçue, le processeur fournit en outre un écran de réglage (50, 60) configuré pour permettre la réception d'un réglage de type d'authentification, qui définit s'il faut autoriser l'établissement d'une connexion entre l'interface de communication sans fil et le point d'accès sans fil à l'aide du type d'authentification inclus dans la pluralité de types d'authentification,
**caractérisé en ce que**, dans un état dans lequel l'entrée d'un administrateur n'a pas été reçue, et en réponse à la réception d'une première instruction de connexion via l'interface utilisateur, le processeur est configuré en outre pour exécuter :
un traitement de recherche (S201, S202) consistant à rechercher des points d'accès sans fil pouvant être connectés ;
un traitement de sélection (S212) consistant à recevoir, via l'interface utilisateur, la sélection d'un point d'accès sans fil sélectionné parmi les points d'accès sans fils pouvant être connectés recherchés par le traitement de recherche ;
un traitement d'établissement (S215) consistant à établir une connexion entre le point d'accès sans fil sélectionné qui a été sélectionné par le traitement de sélection et l'interface de communication sans fil, et
un traitement de réception consistant à recevoir, après l'établissement de la connexion entre le point d'accès sans fil sélectionné et l'interface de communication sans fil, l'instruction concernant la formation d'image à partir d'un dispositif externe par communication sans fil via le point d'accès sans fil sélectionné, et
dans le traitement de sélection basé sur la première instruction de connexion, chacun des points d'accès sans fil pouvant être connectés recherchés par le traitement de recherche est regroupé en un point d'accès sans fil sélectionnable et un point d'accès sans fil non sélectionnable, dans lequel le point d'accès sans fil sélectionnable est un point d'accès sans fil au niveau duquel le type d'authentification, qui est défini pour autoriser l'établissement d'une connexion sur l'écran de réglage, est réglé pour être sélectionnable, et dans lequel le point d'accès sans fil non sélectionnable est un point d'accès sans fil au niveau duquel le type d'authentification, qui est défini pour ne pas autoriser l'établissement d'une connexion sur l'écran de réglage, est réglé pour ne pas être sélectionnable.

2. Appareil de formation d'image selon la revendication 1,
dans lequel, dans le traitement de sélection, le processeur est configuré pour commander un dispositif d'affichage pour afficher, parmi les points d'accès sans fil pouvant être connectés recherchés par le traitement de recherche, une option du point d'accès sans fil sélectionnable dans un mode d'affichage différent de celui d'une option du point d'accès sans fil non sélectionnable.

3. Appareil de formation d'image selon la revendication 1,
dans lequel le processeur fournit l'écran de réglage configuré pour autoriser la réception du réglage de type d'authentification pour chacun de la pluralité de types d'authentification disponibles dans le réseau informatique sans fil.

4. Appareil de formation d'image selon la revendication 1,
dans lequel la pluralité de types d'authentification dans le réseau informatique sans fil sont classés selon la sécurité,
dans lequel le processeur reçoit, sur l'écran de réglage, un réglage indiquant un rang d'une limite quant à la détermination de l'établissement d'une connexion, et
dans lequel le processeur règle sur établir une connexion un type d'authentification ayant un rang plus élevé que la limite reçue, et règle sur ne pas établir une connexion un type d'authentification ayant un rang plus bas que la limite reçue.

5. Appareil de formation d'image selon la revendication 1,
dans lequel le processeur reçoit une entrée d'informations d'authentification, exécute un traitement d'ouverture de session selon les informations d'authentification reçues, et reçoit une entrée d'un administrateur lorsque le traitement d'ouverture de session par un utilisateur ayant une autorité d'administrateur réussit.

6. Appareil de formation d'image selon la revendication 1,
dans lequel le processeur est configuré pour recevoir, à partir d'un dispositif terminal configuré pour exécuter une communication via un réseau et ayant ouvert une session par un utilisateur ayant une autorité d'administrateur, le réglage de type d'authentification via l'écran de réglage.

7. Appareil de formation d'image selon la revendication 1, comprenant en outre :
un serveur web intégré (23), qui un programme destiné à fonctionner comme un serveur web,
dans lequel le processeur est configuré pour, lorsqu'il y a un accès au serveur web intégré et un utilisateur ayant une autorité d'administrateur ouvre une session dans le serveur web intégré, fournir une page web montrant l'écran de réglage à une source d'accès par le serveur web intégré, et recevoir le réglage de type d'authentification par fourniture en entrée à la page web.

8. Appareil de formation d'image selon la revendication 1,
dans lequel le processeur est configuré pour recevoir une deuxième instruction de connexion dans l'état dans lequel une entrée d'un administrateur a été reçue,
dans lequel le processeur est configuré en outre pour exécuter, en réponse à la deuxième instruction de connexion, le traitement de recherche, le traitement de sélection, et le traitement d'établissement, et
dans lequel, dans le traitement de sélection selon la deuxième instruction de connexion, les points d'accès sans fil pouvant être connectés recherchés par le traitement de recherche sont réglés sur sélectionnables sans tenir compte du réglage de type d'authentification.
